# EUROPÄISCHE PATENTANMELDUNG

(11) **EP 2 596 861 A1**
(43) Veröffentlichungstag der Anmeldung: **29.05.2013**
(21) Anmeldenummer: 12000496.5
(22) Anmeldetag: 26.01.2012
(51) Int. Cl.: B01J 19/00, B01J 19/14, B65D 90/44

(54) **Integriertes Inertisierungsverfahren und Inertisierungssystem**

(30) Priorität: 22.11.2011 DE 102011119146
(71) Anmelder: Linde Aktiengesellschaft, 80331 München (DE)
(72) Erfinder: Himmen, Hans-Rudolf, 85778 Haimhausen (DE)
(74) Vertreter: Galander, Marcus

(57) **Zusammenfassung**

Ein Verfahren zur Verhinderung einer Oxidationsreaktion wenigstens einer oxidierbaren Komponente (1) in einem Behälter (10) durch Einspeisen einer Menge wenigstens eines Inertgases (GAN) zu dem Behälter (10) umfasst das Erfassen einer Menge der wenigstens einer oxidierbaren Komponente (1) in dem Behälter (10) durch eine Erfassungseinheit (21), das Bestimmen eines Minimalsauerstoffgehalts einer Gasphase (2) in dem Behälter (10), der zu einer Oxidationsreaktion der wenigstens einen oxidierbaren Komponente (1) in dem Behälter (10) erforderlich ist, auf Grundlage der Menge der wenigstens einen oxidierbaren Komponente (1) in dem Behälter (10) durch eine Berechnungseinheit (22), und das Einspeisen des wenigstens einen Inertgases (GAN) in den Behälter (10) durch eine Einspeiseeinheit (23), bis ein durch eine Messeinrichtung (24) in der Gasphase in dem Behälter (10) gemessener Sauerstoffgehalt den Minimalsauerstoffgehalt unterschreitet. Ein entsprechendes Inertisierungssystem (20) und ein entsprechendes Computerprogrammprodukt sind ebenfalls Gegenstand der Erfindung.

## Beschreibung

Die Erfindung betrifft ein Verfahren zur Verhinderung einer Oxidationsreaktion wenigstens einer oxidierbaren Komponente in einem Behälter, insbesondere einer Entzündung, durch Einspeisen einer Menge wenigstens eines Inertgases in den Behälter, ein Inertisierungssystem und ein Computerprogrammprodukt.

### Stand der Technik

In einer Reihe von chemischen Prozessen ist es erforderlich, eine Entzündung brennbarer Substanzen sowie andere unerwünschte Reaktion zu verhindern, bestimmte Produkte feuchtigkeitsfrei zu halten und bei Wartungsarbeiten an entsprechenden Anlagen eine ausreichende Sicherheit, z.B. vor Explosionen, zu gewährleisten.

Diese Ziele können nicht immer durch technologische Maßnahmen und eine bauliche Anpassung der verwendeten Anlagen alleine erreicht werden. Daher spielen in der chemischen Industrie sogenannte Inertisierungsverfahren unter Verwendung von Inertgasen und entsprechende Vorrichtungen eine wichtige Rolle. Hauptziel ist dabei, die Sauerstoffkonzentration und/oder den Feuchtigkeitsgehalt, insbesondere in der Gasphase, gering zu halten und damit zu verhindern, dass Sauerstoff und/oder Feuchtigkeit in Kontakt mit reaktiven oder absorptiven Stoffen kommen. Hauptsächlich erfolgt die Inertisierung mit Stickstoff, weniger häufig mit Kohlendioxid oder in Ausnahmefällen mit Argon. Zu den einzelnen Verfahren sei auf die Ausführungen unten verwiesen. Die Aufgabe des verwendeten Inertgases ist es, Luft zu verdrängen, welche Sauerstoff und ggf. Feuchtigkeit enthält, oder Luft von entsprechenden Produkten fern zu halten. Die Verdrängung der Luft kann teilweise oder vollständig sein.

In bestimmten Situationen stellt die Inertisierung die einzige Möglichkeit dar, die bei der Herstellung von Chemikalien und bei der Wartung von Anlagen geforderten Sicherheitsstandards einzuhalten. In anderen Fällen wird die Inertisierung verwendet, um eine gewünschte Produktqualität zu erzielen. Technische Gebiete, die von der Inertisierung Gebrauch machen, umfassen die Raffinationstechnik, die Grundchemie, die Petrochemie und die Herstellung von Spezial- und Feinchemikalien.

Insbesondere bei der Inertisierung von Behältern sind die derzeitigen Möglichkeiten zum Einsatz von Inertgasen und die jeweiligen Applikationstechniken jedoch unbefriedigend. Daher besteht der Bedarf nach entsprechend verbesserten Möglichkeiten zur Inertisierung von Behältern.

### Offenbarung der Erfindung

Vor diesem Hintergrund schlägt die vorliegende Erfindung ein Verfahren zur Verhinderung einer Oxidationsreaktion wenigstens einer oxidierbaren Komponente in einem Behälter, insbesondere einer Entzündung, durch Einspeisen einer Menge wenigstens eines Inertgases in den Behälter, ein entsprechendes Inertisierungssystem sowie ein entsprechendes Computerprogrammprodukt mit den Merkmalen der unabhängigen Patentansprüche vor. Bevorzugte Ausgestaltungen sind Gegenstand der jeweiligen abhängigen Ansprüche sowie der nachfolgenden Beschreibung.

### Vorteile der Erfindung

Die erfindungsgemäß vorgeschlagenen Maßnahmen umfassen, eine Menge der wenigstens einen oxidierbaren Komponente in dem Behälter durch eine Erfassungseinheit zu erfassen, einen Minimalsauerstoffgehalt einer Gasphase in dem Behälter, der zu einer Oxidationsreaktion der wenigstens einen oxidierbaren Komponente in dem Behälter erforderlich ist, auf Grundlage der Menge der wenigstens einen oxidierbaren Komponente in dem Behälter durch eine Berechnungseinheit zu berechnen, und durch eine Einspeiseeinheit wenigstens ein Inertgas in den Behälter einzuspeisen, bis ein durch eine Messeinrichtung in der Gasphase in dem Behälter gemessener Sauerstoffgehalt den Minimalsauerstoffgehalt unterschreitet.

Die primär durch die erfindungsgemäßen Maßnahmen zu verhindernde Oxidationsreaktion ist eine Entzündung bzw. Verbrennung. Die Erfindung ist jedoch auch in anderen Einsatzgebieten vorteilhaft, beispielsweise zur Verhinderung der Bildung unerwünschter Nebenprodukte bei chemischen Reaktionen.

Die erfindungsgemäß vorgeschlagenen Maßnahmen sind bei einer Reihe von Inertisierungsverfahren vorteilhaft. Bekannte Inertisierungsverfahren umfassen beispielsweise das Spülen mit einem Inertgas, das in einen entsprechenden Behälter eingelassen wird, um ein Prozessgas, in der Regel Luft mit dem darin enthaltenen Sauerstoff, zu verdrängen (sog. Purging). Auch eine Abdeckung mit einem Inertgas (sog. Blanketing) ist in bestimmten Einsatzgebieten vorteilhaft. Es wird insbesondere dann praktiziert, wenn konstante inerte Bedingungen über einem Produkte gewährleistet werden müssen, beispielsweise um Explosionen, Entfärbungsreaktionen, eine unerwünschte Polymerisation und dergleichen einem Behälter zu verhindern. Schließlich kann ein Inertgas auch in Form von feinverteilten Bläschen durch entsprechende Flüssigkeiten geleitet werden (sog. Sparging), um die Vermischung zu verbessern und den Oberflächenbereich für den Gas-Flüssigkeits-Massentransfer zu vergrößern. Die Technik findet Einsatz in chemischen und biologischen Reaktionen und auch beim sog. Stripping. Beispielsweise wird Stickstoff verwendet, um Sauerstoff aus Öl, Abwasser und anderen Produkten zu strippen.

Ist im Rahmen dieser Anmeldung von einem "Behälter" die Rede, seien darunter sämtliche Behältnisse verstanden, die in der chemischen Industrie zur Aufnahme oder Leitung von entsprechenden Komponenten eingesetzt werden können. Dies umfasst unter anderem Reaktoren, Rührtanks, Zentrifugen, Vakuumfilter, Einreduzierer, Mischer, Speichertanks und -gefäße, Trockner, Silos, Beladesysteme sowie Öl- und Kraftstoffpipelines.

Eine "oxidierbare Komponente" kann jede Chemikalie oder ein Chemikaliengemisch sein, die bzw. das zu einer Reaktion mit Sauerstoff, insbesondere einer Entzündung, befähigt ist und mittels eines Inertisierungsverfahrens von der Reaktion mit Sauerstoff abgehalten werden kann. Eine oxidierbare Komponente kann unter anderem eine Flüssigkeit, ein Feststoff, ein Pulver, ein Granulat, ein Gemisch, ein Gemenge, eine Suspension, eine Lösung oder eine Emulsion sein.

Die erfindungsgemäßen Maßnahmen stellen bedeutende Vorteile bereit, indem sie beispielsweise eine Bildung einer explosiven Atmosphäre in Vorrichtungen wie Reaktoren sicher verhindern, ein sicheres Hoch- und Herunterfahren von Anlagen und Einrichtungen ermöglichen, damit Explosionsrisiken in Speicher- und Lagertanks brennbarer Substanzen vermeiden und Produkte gegen atmosphärischen Sauerstoff schützen. Hierdurch kann auch eine gewünschte Produktqualität sichergestellt und/oder eine optimale Weiterverarbeitung gewährleistet werden. Sicherheits- und Gesundheitsgefahren während einer Wartung entsprechender Anlagen, Vorrichtungen und Leitungen können sicher und zuverlässig verhindert werden.

Besonders vorteilhaft ist ein Verfahren, bei dem das Bestimmen des Minimalsauerstoffgehalts auf Grundlage von in der Berechnungseinheit hinterlegten Entzündlichkeitsdaten und/oder Prozessdaten in dem Behälter ablaufender Prozesse erfolgt. Dies ermöglicht eine angepasste Einstellung eines Sauerstoffgehalts in einer entsprechenden Anlage, so dass das Inertgas jeweils nur in der notwendigen (Minimal-)Menge, ggf. unter Einhaltung entsprechender Sicherheitspuffer, in den Behälter eingebracht werden muss und nicht, wie ohne entsprechende Möglichkeiten, im beträchtlichen Überschuss. Dies ermöglicht es, die Kosten eines entsprechenden Inertisierungsverfahrens bedeutend zu reduzieren. Ein entsprechendes Verfahren kann vollständig automatisiert ablaufen und ermöglicht beispielsweise eine Integration eines Inertisierungsverfahrens in eine Ablaufsteuerung für die Produktion.

Vorteilhafterweise wird die Menge der wenigstens einen oxidierbaren Komponente in den Behälter mittels einer Mengenmessung und/oder auf Grundlage einer Benutzereingabe erfasst. Eine entsprechende Mengenerfassung kann u. a. Wägen, Durchflussmessungen, Schichtdickenmessungen, chemische Analytik und dergleichen mehr umfassen. Durch eine entsprechende Messung und/oder Benutzereingabe kann eine Menge der oxidierbaren Komponente sicher angegeben werden. Eine Messung kann zu einer Plausibilisierung einer Benutzereingabe verwendet werden.

Besondere Vorteile werden erzielt, wenn ein erfindungsgemäßes Inertisierungsverfahren zur Verhinderung einer Entzündung eines Gemisches aus mehreren oxidierbaren Komponenten, insbesondere eines Lösungsmittelgemischs, verwendet wird. Dies umfasst beispielsweise die Herstellung von Beschichtungen, bei denen unterschiedliche (flüssige) Lösungsmittel mit Pulvern oder anderen Feststoffen in Mischern mit einem Volumen von bis zu zwei Tonnen vermischt werden.

Bevor der Mischer mit den Lösungsmitteln befüllt wird, wird er mit einem Inertgas, in den meisten Fällen Stickstoff, gespült. Ein erfindungsgemäßes Verfahren kann dabei die manuelle Eingabe der Komponenten in dem Lösungsmittelgemisch in eine Steuereinrichtung, die eine entsprechende Anlage ansteuert, umfassen.

Auf Grundlage dieser Eingabe erfolgt eine Berechnung der zur Entzündung erforderlichen Minimalsauerstoffgehalte, die durch die Inertisierung unterschritten werden müssen. Nach der Berechnung kann automatisch oder durch einen entsprechenden Startbefehl ein Spülvorgang eingeleitet werden, der kontinuierlich durch eine Sauerstoffmessung und/oder eine Flussmesseinrichtung einer entsprechenden Einspeiseeinrichtung überwacht werden kann.

Die erfindungsgemäßen Maßnahmen können sich die bereits verfügbaren Datenbanken bezüglich Entzündlichkeitswerten entsprechender Lösungsmittel zu Nutze machen, so dass eine vollständig automatisierte Aktivierung und Steuerung eines Inertisierungsverfahrens ermöglicht wird. Dies kann zusätzlich oder alternativ auch eine Kombination mit einem manuellen Inertisierungsverfahren umfassen, so dass auch manuelle Benutzereingriffe möglich sind, beispielsweise wenn in Sonderfällen in einer entsprechenden Datenbank keine Daten hinterlegt sind.

Sauerstoff-Analysesysteme und Zumesseinheiten für Inertgase, im Rahmen dieser Erfindung als "Einspeiseeinheiten" bezeichnet, typischerweise mit Druckregulatoren und -anzeigen, Ventilen und Flussmessern, sind grundsätzlich bekannt. Vorteilhafterweise können derartige Einrichtungen in ein entsprechendes Inertisierungssystem integriert werden.

Wie bereits zuvor erwähnt, kann ein erfindungsgemäßes Verfahren besonders vorteilhaft dazu eingesetzt werden, eine Inertgasabdeckung, eine Inertgasverdünnung oder ein Inertgasdurchspülung in einen Behälter bereitzustellen.

Das erfindungsgemäße Verfahren umfasst unter anderem die Verwendung von Stickstoff, Argon und/oder Kohlendioxid als Inertgas. Die jeweilige Auswahl kann flexibel nach dem jeweiligen Einsatzgebiet erfolgen. Beispielsweise kann ein entsprechendes Inertisierungssystem auch zu verwendende Gase und/oder Gasmischungen automatisch vorgeben und/oder einstellen.

Besonders vorteilhaft ist ein Verfahren, das das Ausgeben einer Meldung durch Ausgabemittel umfasst, wenn der durch die Messeinrichtung in der Gasphase in dem Behälter gemessene Sauerstoffgehalt den Minimalsauerstoffgehalt unterschreitet.

Die zuvor erläuterten Vorteile betreffen das erfindungsgemäße Verfahren, das erfindungsgemäße Inertisierungssystem und das erfindungsgemäße Computerprogrammprodukt in gleicher Weise.

Eine Recheneinheit, z.B. eines Inertisierungssystems, ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben, z.B. zur Prozessführung, genutzt wird und daher ohnehin vorhanden ist. Geeignete Datenträger zur Bereitstellung des Computerprogrammprodukts sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben. Figurenbeschreibung
Figur 1 zeigt ein Inertisierungssystem gemäß einer Ausführungsform der Erfindung.
Figur 2 zeigt ein Entzündlichkeitsdiagramm, das der Erfindung zugrunde liegen kann.

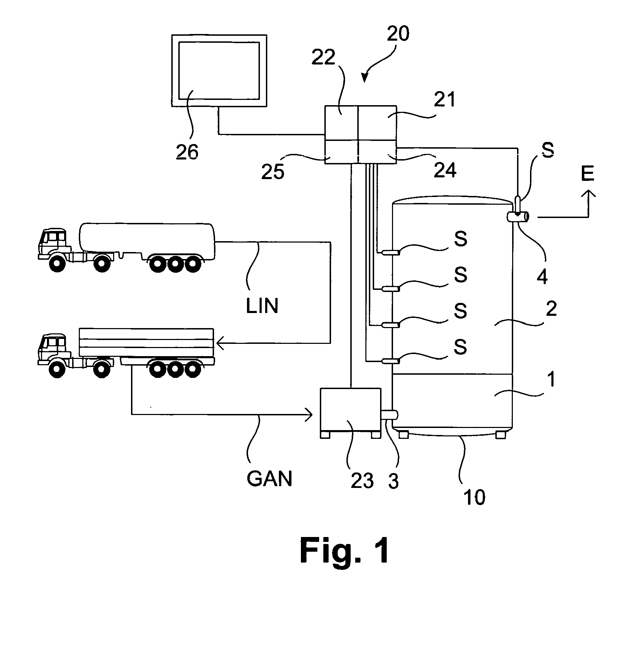

Figur 1 zeigt ein Inertisierungssystem gemäß einer Ausführungsform der Erfindung.
Das Inertisierungssystem ist insgesamt mit 20 bezeichnet. Es dient zur Inertisierung eines Behälters 10, der, wie zuvor erläutert, beispielsweise als Reaktionsgefäß, Zentrifuge, Speichertank, Reaktor und dergleichen ausgebildet sein kann. In dem Behälter 10 befindet sich eine oxidierbare Komponente 1, über der sich eine Gasphase 2 befindet. Der Behälter 10 verfügt über eine Einlassöffnung 3 und eine Auslassöffnung 4 für ein Inertgas. Weitere Ein- und Auslassöffnungen, Beladeeinrichtungen und dergleichen sind der Übersichtlichkeit halber nicht dargestellt. Beispielsweise über entsprechende LKW kann flüssiger Stickstoff LIN oder ein anderes Inertgas bereitgestellt und als gasförmiger Stickstoff GAN in eine Einspeiseeinheit 23 eingespeist werden. Das Inertisierungssystem 20 kann, beispielsweise in der Einspeiseeinheit 23, über entsprechende Vorratstanks und/oder Gasmischer verfügen. Die Einspeiseeinheit 23 speist das Inertgas GAN in den Behälter 10 ein, wobei die zuvor erläuterten Inertisierungsverfahren zur Anwendung kommen können.

Die Einspeiseeinheit wird durch eine Steuereinheit 25 angesteuert. Die Steuereinheit 25 steht beispielsweise mit einer Berechnungseinheit 22 in Wirkverbindung, die zum Bestimmen eines Minimalsauerstoffgehalts der Gasphase 2, der zu einer Oxidationsreaktion der wenigstens einen oxidierbaren Komponente 1 in den Behälter 10 erforderlich ist in dem Behälter 10 eingerichtet ist. Hierzu ist eine Erfassungseinheit 21 vorgesehen, die eine Menge der oxidierbaren Komponente 1 in dem Behälter 10 angibt. Eine Messeinrichtung 24 ist ebenfalls vorgesehen, die über einen oder mehrere Sensoren S eine Sauerstoffkonzentration in einer Gasphase 2 in dem Behälter 10, z. B. über Kabel oder Funkverbindungen, erfassen kann. Die Messeinrichtung 24 stellt entsprechende Messdaten an die Berechnungseinheit 22 bereit. Die Erfassungseinheit 21 stellt die erfasste Menge der wenigstens einen oxidierbaren Komponente 1 in dem Behälter 10 an die Berechnungseinheit 22 bereit. Die Erfassungseinheit 21, die Berechnungseinheit 22, die Messeinrichtung 24 und die Steuereinheit 25 können, ggf. zusammen mit der Einspeiseeinheit 23, als Teil eines integrierten Inertisierungssystems 20 in zumindest einer baulichen Einheit zusammengefasst werden. Auch ist ein modularer Aufbau einer entsprechenden Einheit mit austauschbaren Komponenten möglich.

Die Steuereinheit 25 steuert die Einspeiseeinheit 23 so lange zum Einspeisen des Inertgases GAN in den Behälter 10 an, bis die Gasphase 2 in dem Behälter 10 gemessene Sauerstoffgehalt den Minimalsauerstoffgehalt unterschreitet. Eine Ausgabeeinheit 26 kann vorgesehen sein, mittels derer momentane Mess- oder Prozessdaten und/oder eine bevorstehende oder erfolgte Beendigung eines Inertisierens an einen Benutzer angezeigt werden kann.

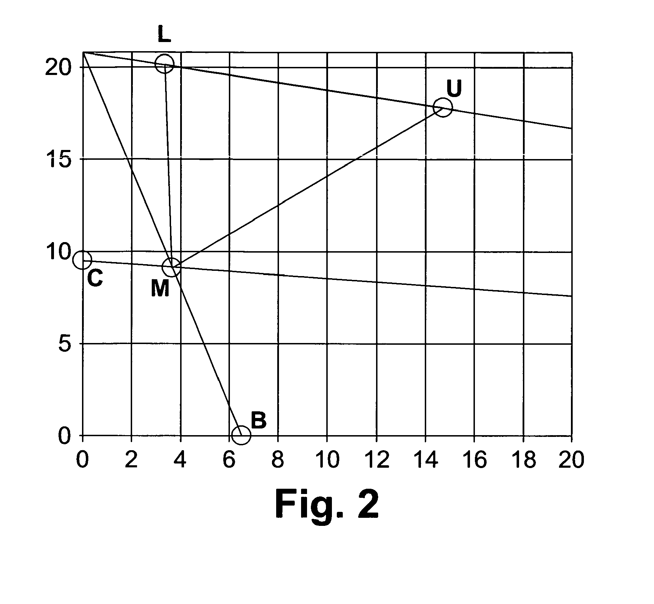

Die Figur 2 zeigt ein Entzündlichkeitsdiagramm, wie es einer Berechnungseinheit gemäß einer Ausführungsform der vorliegenden Erfindung zugrunde liegen kann. In dem Diagramm der Figur 2 ist eine Sauerstoffkonzentration in Volumenprozent (Vol.-%) auf der Ordinate gegen eine Konzentration einer oxidierbaren Komponente in Vol.-% auf der Abszisse aufgetragen. Im vorliegenden Fall stellt die oxidierbaren Komponente ein Gemisch aus 75 Vol.-% Methan, 15 Vol.-% Propan und 10 Vol.% Isobutan dar. Geht man beim Start eines Inertisierungsvorgangs von einer Luftatmosphäre aus (Sauerstoffkonzentration 20,9 Vol-%), muss mindestens bis zum Punkt C inertisiert werden (Sauerstoffkonzentration 9,5 Vol.-%), um den explosionsgefährdeten Bereich L-M-U beim nachfolgenden Einleiten der oxidierbaren Stoffe zu umgehen. Geht man beim Start eines Inertisierungsvorgangs von einer brennbaren Atmosphäre aus (z. B. 100 Vol-%), muss mindestens bis zum Punkt B inertisiert werden (Brenngaskonzentration 6,5 Vol.-%), um den explosionsgefährdeten Bereich L-M-U beim nachfolgenden Einleiten von Luft zu umgehen. In der Praxis wird zur Sicherheit noch weiter unter die Punkte B und C inertisiert, bevor die "neue" Atmosphäre eingeleitet wird. Zwischen den in der Figur dargestellten Punkten L, M und U ist ein sogenanntes Entzündlichkeitsdreieck aufgespannt. Dieses ist definiert durch eine Minimalkonzentration M an Sauerstoff, die für eine Entzündung erforderlich ist. Der Punkt L bezeichnet eine untere Entzündlichkeitsgrenze, die bei 3,3 Vol.-% der wenigstens einen oxidierbaren Komponente liegt. Die obere Entzündlichkeitsgrenze U liegt bei 14,8 Vol.-% der wenigstens einen entzündlichen Komponente.

## Patentansprüche

1. Verfahren zur Verhinderung einer Oxidationsreaktion wenigstens einer oxidierbaren Komponente (1) in einem Behälter (10) durch Einspeisen einer Menge wenigstens eines Inertgasen (GAN) in den Behälter (10), mlt den folgenden Schritten:
a) Erfassen einer Menge der wenigstens einer oxidierbaren Komponente (1) in dem Behälter (10) durch eine Erfassungseinheit (21),
b) Bestimmen eines Minimalsauerstoffgehalts einer Gasphase (2) in dem Behälter (10), der zu einer Oxidationsreaktion der wenigstens einen oxidierbaren Komponente (1) in dem Behälter (10) erforderlich ist, auf Grundlage der Menge der wenigstens einen oxidierbaren Komponente (1) in dem Behälter (10) durch eine Berechnungseinheit (22), und
c) Einspeisen des wenigstens einen Inertgases (GAN) in den Behälter (10) durch eine Einspeiseeinheit (23), bis ein durch eine Messeinrichtung (24) in der Gasphase in dem Behälter (10) gemessener Sauerstoffgehalt den Minimalsauerstoffgehalt unterschreitet.

2. Verfahren nach Anspruch 1, bei dem das Bestimmen des Minimalsauerstoffgehalts auf Grundlage von in der Berechnungseinheit (22) hinterlegten Entzündlichkeitsdaten und/oder Prozessdaten in dem Behälter (10) ablaufender Prozesse erfolgt.

3. Verfahren nach Anspruch 1 oder 2, bei dem die Menge der wenigstens einer oxidierbaren Komponente (1) in dem Behälter (10) mittels einer Mengenmessung und/oder auf Grundlage einer Benutzereingabe erfasst wird.

4. Verfahren nach einem der vorstehenden Ansprüche, das zur Verhinderung einer Entzündung eines Gemischs aus mehreren oxidierbaren Komponenten (1), insbesondere eines Lösemittelgemischs, verwendet wird.

5. Verfahren nach einem der vorstehenden Ansprüche, bei dem das wenigstens eine Inertgas (GAN) zur Bereitstellung einer Inertgasabdeckung, einer Inertgasverdünnung oder einer Inertgasdurchspülung in den Behälter (10) eingespeist wird

6. Verfahren nach einem der vorstehenden Ansprüche, bei dem das wenigstens eine Inertgas (GAN) Stickstoff, Argon und/oder Kohlendioxid aufweist.

7. Verfahren nach einem der vorstehenden Ansprüche, das ferner umfasst:
d) Ausgeben einer Meldung durch Ausgabemittel (26), wenn der durch die Messeinrichtung (24) in der Gasphase in dem Behälter (10) gemessene Sauerstoffgehalt den Minimalsauerstoffgehalt unterschreitet.

8. Inertisierungssystem (20), das zur Durchführung eines Verfahrens gemäß einem der vorstehenden Ansprüche eingerichtet ist, mit:
a) einer Erfassungseinheit (21), die zur Erfassung einer Menge der wenigstens einen oxidierbaren Komponente in dem Behälter (10) eingerichtet ist,
b) einer Berechnungseinheit (22), die zum Bestimmen eines Minimalsauerstoffgehalts einer Gasphase (2) in dem Behälter (10), der zu einer Oxidationsreaktion der wenigstens einen oxidierbaren Komponente (1) in dem Behälter (10) erforderlich ist, auf Grundlage der Menge der wenigstens einen oxidierbaren Komponente (1) in dem Behälter (10) eingerichtet ist,
c) einer Messeinrichtung (24), die zum Messen eines Sauerstoffgehalts einer Gasphase (2) in dem Behälter (10) eingerichtet ist,
d) einer Einspeiseeinheit (23), die zum Einspeisen des Inertgases (GAN) in den Behälter (10) eingerichtet ist, und
e) einer Steuereinheit (25), die dafür eingerichtet ist, die Einspeiseeinheit (23) so lange zum Einspeisen des Inertgases (GAN) in den Behälter (10) anzusteuern, bis der in der Gasphase (2) in dem Behälter (10) gemessene Sauerstoffgehalt den Minimalsauerstoffgerhalt unterschreitet.

9. Inertisierungssystem (20), nach Anspruch 8, das ferner aufweist:
d) Ausgabemittel (26), die zum Ausgeben einer Meldung eingerichtet sind, wenn der durch die Messeinrichtung (24) in der Gasphase in dem Behälter (10) gemessene Sauerstoffgehalt den Minimalsauerstoffgehalt unterschreitet.

10. Computerprogrammprodukt mit Programmcodemitteln, das, wenn es auf einer Recheneinheit, insbesondere einer Berechnungseinheit (22) eines Inertisierungssystems (20) nach Anspruch 8 oder 9 ausgeführt wird, aus einer Menge wenigstens einer oxidierbaren Komponente in einem Behälter (10) einen Minimalsauerstoffgehalt einer Gasphase (2) in dem Behälter (10), der zu einer Oxidationsreaktion der wenigstens einen oxidierbaren Komponente (1) in dem Behälter (10) erforderlich ist, zu berechnen und Ansteuerbefehle zu generieren, die technische Gegebenheiten einer Steuereinheit (25) und/oder einer Einspeiseeinheit (23) berücksichtigen, um diese dazu zu veranlassen, wenigstens ein Inertgas (GAN) in den Behälter (10) einzuspeisen, bis ein durch eine Messeinrichtung (24) in der Gasphase in dem Behälter (10) gemessener Sauerstoffgehalt den Minimalsauerstoffgehalt unterschreitet.
